Europäisches Patentamt

European Patent Office

Office européen des brevets

(11) Publication number: **0 173 162**
A1

# EUROPEAN PATENT APPLICATION

(21) Application number: **85110131.1**

(22) Date of filing: **13.08.85**

(51) Int. Cl.⁴: **B 64 D 15/18**

(30) Priority: **31.08.84 US 645964**

(43) Date of publication of application: **05.03.86**
Bulletin 86/10

(84) Designated Contracting States: **DE FR GB IT**

(71) Applicant: **The B.F. GOODRICH Company,
Dept. 0015 WHB-6 500 South Main Street, Akron,
Ohio 44318 (US)**

(72) Inventor: **Weisend, Norbert Adrian, Jr., 2477-15th Street,
Cuyahoga Falls Ohio 44223 (US)**

(74) Representative: **von Kreisler, Alek, Dipl.-Chem. et al,
Deichmannhaus am Hauptbahnhof, D-5000 Köln 1 (DE)**

(54) **Pneumatic deicer.**

(57)  A deicer pad (10) for use on an aircraft wing (12) wherein the deicer pad is constructed to have an intermediate portion and two spaced apart portions. The intermediate portion has a pair of spanwise passageways (25, 26) disposed along the leading edge (11-11) of the wing separately inflatable and also subject to have a vacuum pulled thereon. The two spaced apart portions of the deicer has spanwise passageways (20÷33; 40÷43) that are inflatable during the pulling of a vacuum on the pair of tubes and alternatively such passageways of the two spaced portions are subject to a vacuum being drawn thereon while the pair of tubes (25, 26) are being inflated.

-1-

PNEUMATIC DEICER

BACKGROUND OF THE INVENTION

This invention relates to aircraft deicers and more particularly to an improved inflatable deicer or boot adapted for attachment to the airfoil of an aircraft to retard the accumulation of ice or to remove or break up ice accumulation.

Aircraft inflatable deicers, pads or boots are made of resilient material such as rubber and attached to the leading edge of an airfoil and extend rearwardly therefrom. The deicer has a series of inflatable passages or tubes which are distended by inflation pressure to break up ice accumulation which tends to form on the surface of the deicer. The passages or tubes are deflated by releasing the pressure medium and drawing a vacuum thereon. The normal sequence of operation is a continuous cycling of the inflation and deflation process. The present invention is an improvement on the structure and operation of such deicers wherein the deicer has a plurality of spanwise stretchable tubes with a first set located along the leading edge of the airfoil and a second and third set on either side of the first set which extend rearwardly back from the leading edge. The first set and second and third set of tubes are inflated in two separate sequences. The first inflation sequence is to inflate the first set of spanwise tubes which are located along the leading edge of the airfoil. The second sequence of inflation inflates the second and third set of tubes aft of the first set while simultaneously deflating the first set of tubes. The cycle of operation is completed by deflating the second set of tubes, thus returning the airfoil to its normal operating condition with no deicer tubes inflated. The cycle of operation for a slight variation on this is to inflate the first set of tubes followed by its deflation while the second and third set of tubes are inflated. The next operation is then to deflate the second and third set of tubes while inflating the first set of tubes. This cycle is repeated until the ice is removed and all tubes are then deflated and remain in its normal deflated condition. The advantage achieved by this sequence of design and operation is to concentrate the deicing stresses on the leading edge tubes to more completely fracture the ice cap. More complete fracturing occurs because the ice bond strength will be high on the adjacent non-inflating tubes thus causing the fracturing stresses to be more concentrated in the critical cap portion of the ice. Complete fracture of the ice cap along the airfoil's leading edge centerline is important to good ice removal. The design of such deicer is achieved in a unique arrangement of spanwise tubes, which can be done economically while achieving a good aerodynamic drag design which is superior to those heretofore used.

## SUMMARY OF THE INVENTION

The present invention is directed to a deicer pad or boot that is mounted on the leading edge of an airfoil wing. Such deicer pad has an intermediate portion and two spaced apart portions. The intermediate portion has a pair of spanwise passageways or tubes that are located on either side of the leading edge of the airfoil defining a first set of passageways. One of the two spaced apart portions has a plurality of spanwise passageways defining a second set of passageways with at least one of such passageways having an edge that is common to one of the pair of passageways. The other one of said spaced apart portions has a plurality of spanwise passageways defining a third set of passageways with at least one of such passageways having an edge that is common to the other one of the pair of passageways.

## BRIEF DESCRIPTION OF THE DRAWINGS

Fig. 1 is an enlarged perspective view partly in section of a portion of an aircraft's airfoil showing the pneumatic inflation tubes of the deicer's leading edge tubes in distended condition.

Fig. 2 is an enlarged perspective view partly in section of a portion of an aircraft's airfoil showing the pneumatic inflation tubes of the deicer's leading edge tubes in a collapsed condition but with the inflation tubes aft of the leading edge tubes in distended condition.

Fig. 3 is a partial cross-section of the deicer or deicer boot taken along the line 3-3 of Figure 4 when the deicer is in its second inflation sequence.

Fig. 4 is a plan view of the deicer pad or boot in a flat condition prior to mounting on the airfoil of an aircraft showing the inflation passageways in dotted lines.

Fig. 5 is a plan view of the deicer pad in a flat condition with a diagrammatic view of one form of controls for such deicer pad.

## DETAILED DESCRIPTION

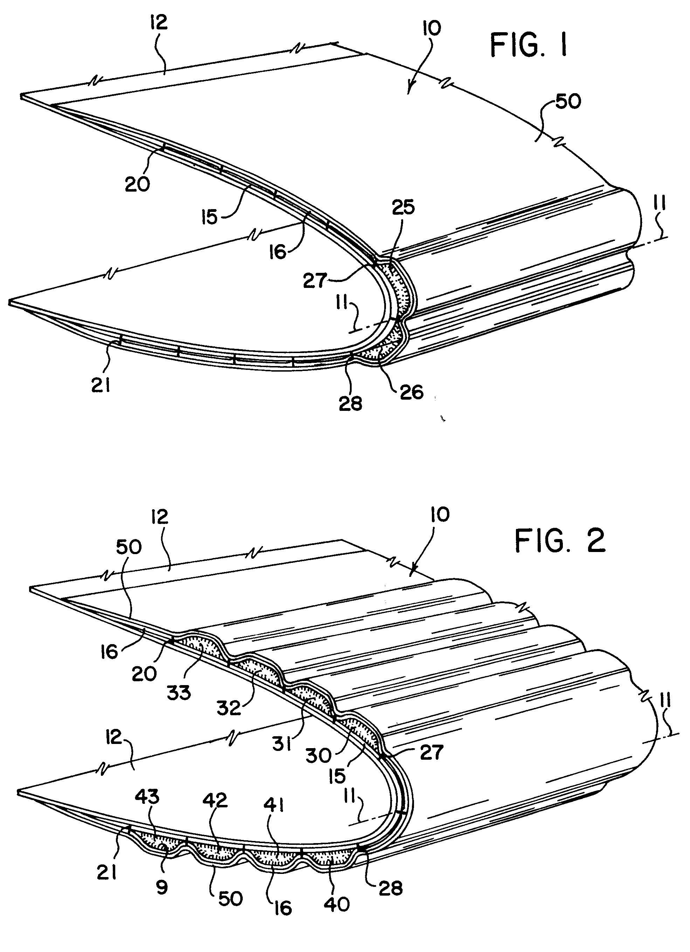

Referring to the drawings wherein like reference numerals designate like or corresponding parts throughout the several views, there is shown in Figs. 1 and 2 a deicer boot or pad 10 mounted on the leading edge of a wing or airfoil 12 of an aircraft not shown. Although the invention is described with respect to a wing, it is equally applicable to a tail section of an aircraft.

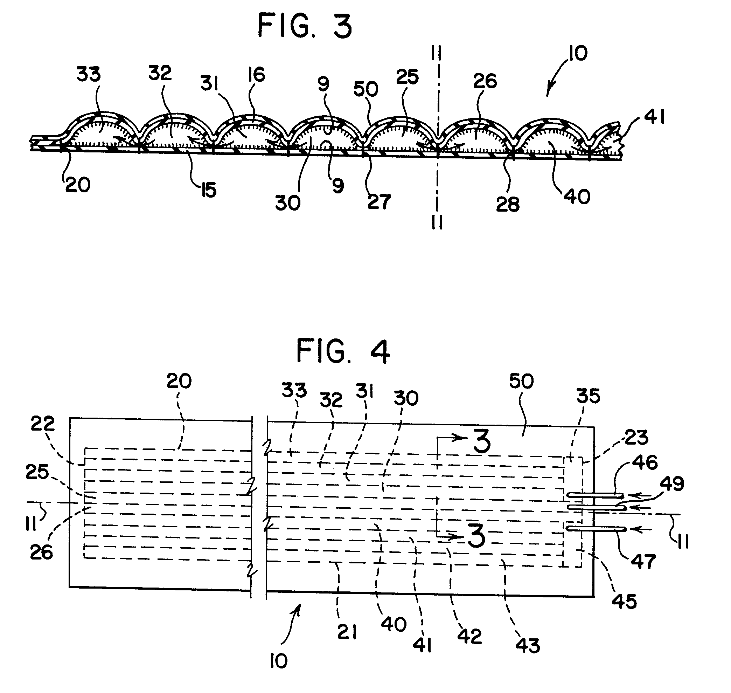

The deicer pad 10 as mounted extends rearwardly from the leading edge 11-11 over a portion of the upper and lower surface portions of the wing 12. The deicer pad 10 is a laminated structure having an inner ply 15 (Fig. 4-6) that is essentially a rectangular section of rubber or other resilient rubber-like material that tapers as the other layers to be described at the respective side edges to facilitate the installation on the wing 12 without interfering with the aerodynamic effects of the airfoil design. In lieu of tapering the plies, the plies can have rectangular sides that fit snugly into recessed portions of the wing. Such deicer pad 10 and ply 15 have a longitudinal center line that coincides with the leading edge 11-11 and is therefore also designated 11-11 in Fig. 4 since those lines are coincident. Such longitudinal center line of pad 10 lies along the leading edge of the wing 12 as indicated in Figs. 1 and 2. Such ply 15 may be a woven textile fabric which is suitably coated with a suitable rubber compound to make this ply 15 air impervious. As seen in Figs. 2 and 3, the inside of the plies forming the passageways have a heavy nap 9. Such interior napped surface is composed of very short closely grouped flexible fibers of overall uniform thickness. Such fibers mat together and collectively prevent complete closure and direct contact between opposing internal surfaces of the passageways to be described when the deicer pad is delfated, but have interstices through which residual air in the passageways may be vented or pumped as by a vacuum. By such uniform distribution of fibers, the external surface of the deicer pad is smooth and regular when the passageways are deflated and flattened. The terms spanwise and chordwise are used herein to designate the general direction of the passageways within the deicer pad as orientated on the aircraft's wing or airfoil. Spanwise is in a direction parallel to the leading edge of the aircraft's airfoil while chordwise is along a line extending from the leading edge of the airfoil to the trailing edge of the airfoil (which is generally normal to the leading edge of the airfoil or normal to the spanwise direction). The final coating of the ply 15 is deferred until the ply stocks are stitched in a manner to be described. A ply 16 (Figs. 2 and 3) of tricot fabric overlays ply 15 and is stitched to such ply 15 along the longitudinal center line 11-11 as indicated in Figs. 1 and 4. The plies 15 and 16 are then stitched along the outer edge as at 20 and 21 and side edge as at 22 and 23. The stitching along line 11-11 extends from side edge 22 to side edge 23.

Using the longitudinal center line 11-11 as a base, two parallel spanwise passageways 25 and 26 are formed by stitching the plies 15 and 16 together along parallel lines such as stitching 27 and 28. Such passageways 25 and 26 are formed by the stitch lines 27, 28 and line 11-11. Such stitch lines 27, 28 and 11-11 of plies 15 and 16 are also sealed. In lieu of stitiching and sealing to form such passageways separate tubes may be used. A further alternative is to seal stitching 27 and 28 only, thereby alowing the flow of air between passageways 26 and 26 along stitching 11-11. The inside of ply 16 is alo napped as ply 15 described hereinabove. Such passageways 25 and 26 are along the intermediate portion of the deicer pad and overlie the leading edge of the airfoil or wing 12.

That portion of the pad that lies between the longitudinal center line 11-11 and the outer edge stitched portion 20 is the upper deicer portion and that portion of the pad 10 that lies between the longitudinal center line 11-11 and the outer stitched edge 21 is the lower deicer portions. Beginning along the outer edge 20 of the upper portion of the deicer pad namely plies 15 and 16, the plies are stitched together by stitching seams parallel to the stitch line 27 to form a plurality of parallel passageways 30, 31, 32 and 33. Although four passageways are shown any number of passageways may be formed. Passageways 30 through 33 form a second series of spanwise passagewys that are parallel to passageways 25 and 26. The stitching line between passageways 30 and 33 can be sealed to thereby require a manifold 35 at one extremity of the upper portion of the pad to pressure and deflate such passageways. As seen in Fig. 4, such manifold 35 is adjacent the side edge 23.

In a similar manner, that portion of the deicer pad that lies in the lower deicer portion between stitching 28 and the stitching of the outer edge 21 is stitched together by seams that run parallel to the stitch line 28 forming a plurality of parallel passageways 40, 41, 42 and 43. Such stitching that forms passageways 40, 41, 42 and 43 may also sealed which therefor will require a manifold 45 at one extremity such as adjacent the side edge 23 to pressure and deflate such passageways. In lieu of forming such passageways 40 through 43 by stitching, separate tubes may be used, however, this structure would reduce the aerodynamic characteristics of the deicer. Each manifold 35 and 45 may be provided with an interior napped surface as with short flexible fibers of uniform thickness to prevent complete closure and direct contact with the adjacent respective passageway 30 through 33 and 40 through 43. To inflate the manifolds 35 and 45 (and the passageways connected thereto) conduits 46 and 47 are connected thereto and to a suitable air pressure source and a suitable vacuum source. In addition a conduit 49 is connected to passageway 25 to permit pressurization and deflation of passageways 25 and 26. Where passageways 25 and 26 are separate tubes or sealed passageways then each passageway 25 and 26 has its own conduit 49 for inflation and deflation.

After the completion of the stitching of plies 15 and 16 the outer ply 16 is coated with a suitable rubber compound to form a layer 50 make such deicer pad or boot 10 impervious to air. Additional plies may be adhered to either the outside ply 50 or to the coated ply 15 to make a single composite deicer pad. Such outer ply 50 may be an exterior rubber gum ply which is a resilient rubber compound such as a polyurethane or neoprene rubber which is resistant to the erosion of wind and rain.

In an installation of the above described deicer pad 10 on the wing 12 of an aircraft, the deicer shoe, pad or boot 10 is adhered flat against the surface of the leading edge and adjacent portions of the wing by a suitable adhesive of which many different kinds are well known in the art such that the longitudinal center line 11-11 of the deicer pad 10 coincides with the centerline of the leading edge of the wing 12. The bottom ply 15 has its upper portion adhered to the upper tapering surface of the wing 12 while the lower portion of the ply 15 is adhered to the lower tapering surface of the wing.

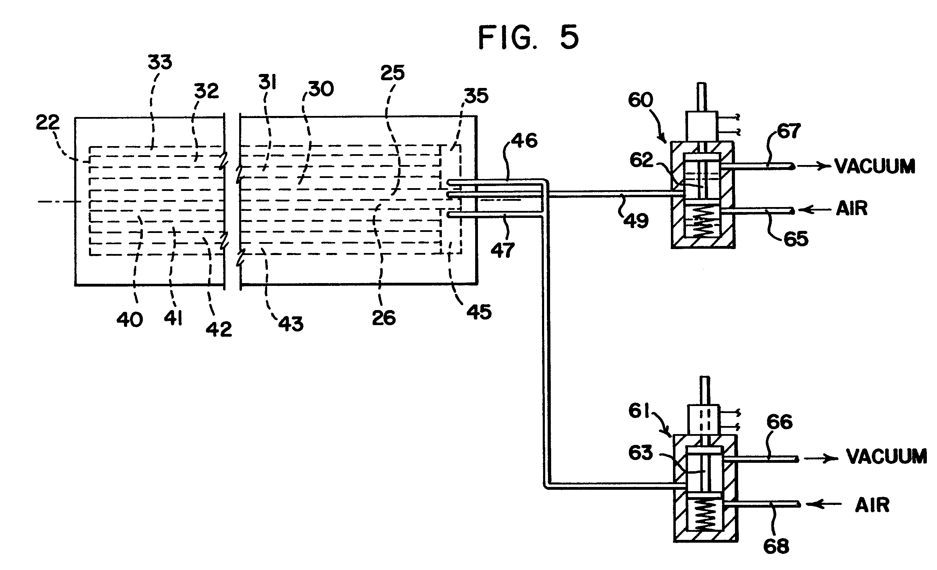

A schematic of the control means for selectively inflating and pulling a vacuum on the passageways of the deicer is shown in Fig. 5. Solenoid operated control valve 60 is connected to conduit 49 while solenoid operated control valve 61 is connected to conduits 46, 47. As seen in Fig. 5, spool 62 in the actuated condition of valve 60 (shown in dotted lines) connects the pressurized air source via conduit 65 to conduit 49 which pressurize passageways 25 and 26 while spool 63 in valve 61 connects the respective manifolds 35 and 45 via conduits 46 and 47 to conduit 66 and a suitable vacuum source which maintains the passageways 30 through 33 and passageways 40 through 43 in a deflated condition. The second cycle of the deicing process then via a suitable timer deactivates control valve 60 and actuates control valve 61 to connect conduit 49 via spool 62 to conduit 67 which pulls a vacuum and deflates passageways 25 and 26 while control valve 61 connects conduits 46 and 47 to a suitable air pressure source via conduit 68 which inflates passageways 30 through 33 and passageways 40 through 43. The deicing operation is depicted by Figs. 1 and 2 wherein passageways 25 and 26 are initially inflated with pressurized air (as depicted by Fig. 1) to distend such passageways which provides shearing stresses to the ice overlying the leading edge of the deicer causing such ice to be broken into pieces and breaking its bond with the overlying deicer surface. This coupled with the scavenging effect of the air stream begins the deicing process. Passageways 25 and 26 are then deflated. Simultaneously with the deflation of such passageways 25 and 26 effected by the pulling of a vacuum thereon, pressurized air is introduced into passageways 30 through 33 and passageways 40 through 43 (as depicted by Fig. 2). These cycles of operation are repeated to complete the deicing of the wing 12 effectively. Such operation concentrates the initial stress fracturing of the deicer along the leading edge which is the critical cap portion of the ice. The complete fracture of the ice cap along such airfoil's leading edge centerline is essential to good ice removal. The subsequent inflation of the other passageways while deflating the passageways along the leading edge effects the removal or cracking of the remaining portion of the ice that is more readily removed. The aerodynamic drag of the above described design when inflated is less than where alternate passageways are inflated followed by inflating the remaining alternate passageways.

Various modifications are contemplated and may obviously be resorted to by those skilled in the art without departing from the described invention, as hereafter defined by the appended claims.

0173162

## CLAIMS

1. An apparatus for preventing the accumulation of ice upon the forwardly disposed portion of the leading edge of an airfoil, said apparatus having a flexible resilient sheet-like protective covering including a pair of side edges and a pair of outer edges, said outer edges lying parallel to the leading edge of said airfoil, said resilient covering having a pair of adjacent inflatable tubes extending spanwise on said airfoil extending from one of said side edges to the other one of said side edges, said adjacent pair of tubes overlying said leading edge of said airfoil defining a first set of tubes, a plurality of spanwise passageways lying to either side of said pair of tubes extending from one of said side edges to the other one of said side edges, said passageways having certain ones lying adjacent said tubes having a common edge thereby, means operatively connected to said tubes and passageways to inflate said first set of tubes and said means thence operative to inflate said passageways while simultaneously deflating said first set of tubes.

2. An apparatus for preventing the accumulation of ice upon the forwardly disposed portion of the leading edge portion of an airfoil as set forth in claim 1 wherein said pair of tubes lie on opposite sides of said leading edge.

3. An apparatus for preventing the accumulation of ice upon the forwardly disposed portion of the leading edge portion of an airfoil as set forth in claim 2 wherein said plurality of passageways are individual separate tubes interconnected by manifolds to assure simultaneous inflation thereof.

4. An apparatus for preventing the accumulation of ice upon the forwardly disposed portion of the leading edge portion of an airfoil as set forth in claim 2 wherein said first set of tubes are passageways formed by stitching along their common adjacent edge provide air communication around said stitching and into said tube passageways.

5. A pneumatic inflatable deicer pad for a wing of an aircraft having a leading edge, an inboard and an outboard end; said pad having an intermediate portion overlying said leading edge and also having a pair of spaced apart portions located rearward of said leading edge when positioned on said wing to provide a pair of rearwardly disposed edges that are parallel to said leading edge; said deicer pad having an inner ply for attachment to said wing; and upper extensible elastic ply overlying said inner ply; said plies having a pair of spanwise passageways along said leading edge, said pair of passageways defining a first set of passageways, said passageways having a common edge and spaced outer edges that are parallel, said common edge lying closely adjacent said leading edge, said plies having a plurality of spanwise passageways extending from one of said outer edges of one of said pair of passageways to one of said rearwardly disposed edge defining a second set of passageways, said plies having a plurality of spanwise passageways extending from the remaining one of said outer edges of the other one of said pair of passageways to the other one of said rearwardly disposed edge defining a third set of passageways, a pressurized air source operatively connected to said passageways to inflate said first set of passageways followed by inflation of said second and third sets of passageways in a cyclic action, a vacuum source operatively connected to said passageways to pull a vacuum on said first set of passageways when said second and third set of passageways are inflated while pulling a vacuum on said second and third set of passageways when said first set of passageways are inflated, and an outer resilient ply overlying said deicer pad.

6. A pneumatic deicer pad for a wing of an aircraft as set forth in claim 7 wherein said deicer pad overlies said wing with the center line of said pad coinciding with said leading edge of said wing, and said common edge of said first set of passageways lying substantially on said leading edge of said wing.

7. A pneumatic deicer pad for a wing of an aircraft as set forth in claim 6 wherein said inner ply and said upper ply are stitched together to form said second set and said third set of passageways, and said passageways of said second set communicate with eac other around said stitching, and said passageways of said third set communicate with each other around said stitching.

8. A pneumatic deicer pad for a wing of an aircraft as set forth in claim 6 wherein said passageways in said second set and said third set are fromed by separate tubes.

9. A pneumatic deicer pad for a wing of an aircraft as set forth in claim 9 wherein said passageways have npped surfaces on their interior plies.

FIG. 1

FIG. 2

## FIG. 3

## FIG. 4

# FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 608 505 (B.F. GOODRICH CO.) <br> * Page 2, lines 102-109; page 3, lines 8-14, 61-65; page 3, lines 85-90; page 5, lines 52-62; page 6, lines 90-96, 108-116; figures 8,9 * | 1-3 | B 64 D 15/18 |
| | --- | | |
| A | US-A-3 370 814 (B.F. GOODRICH CO.) <br> * Claims 1-5 * | 1 | |
| | --- | | |
| A | EP-A-0 066 519 (CAOUTCHOUC MANUFACTURE ET PLASTIQUE S.A.) | | |
| | --- | | |
| A | EP-A-0 098 182 (S.N.E.C.M.A.) | | TECHNICAL FIELDS SEARCHED (Int. Cl.4) |
| | --- | | |
| E | GB-A-2 139 586 (B.F. GOODRICH CO.) | | B 64 D |
| | ----- | | |

The present search report has been drawn up for all claims

| Place of search | Date of completion of the search | Examiner |
|---|---|---|
| THE HAGUE | 07-11-1985 | MARTINOZZI G.M.E. |